# EUROPÄISCHE PATENTANMELDUNG

(11) **EP 1 101 956 A2**
(43) Veröffentlichungstag der Anmeldung: **23.05.2001**
(21) Anmeldenummer: 00811062.9
(22) Anmeldetag: 10.11.2000
(51) Int. Cl.: F16B 13/12

(54) **Ankerstange für Verankerungen mit organischen und/oder anorganischen Mörtelmassen**

(30) Priorität: 19.11.1999 DE 19955684
(71) Anmelder: HILTI Aktiengesellschaft, 9494 Schaan (LI)
(72) Erfinder: Ayrle, Thomas, 86830 Schwabmünchen (DE)
(74) Vertreter: Wildi, Roland

(57) **Zusammenfassung**

Eine Ankerstange für Verankerungen mit organischen und/oder anorganischen Mörtelmassen besitzt einen Schaft (2) mit einem Anschlussbereich (3) und einem Verankerungsbereich (4). Der Verankerungsbereich weist wenigstens zwei axial hintereinander angeordnete, konusartige Erweiterungen auf, deren Durchmesser jeweils in Richtung des freien Vorderendes (5) des Verankerungsbereichs (4) zunimmt. Die an das freie Vorderende (5) angrenzende konusartige Erweiterung ist als Abschlusskonus (6) ausgebildet, der axial unverrückbar mit dem Schaft (2) verbunden ist. Die zweite konusartige Erweiterung ist von einem separaten Konuselement (7) gebildet, das auf den Verankerungsbereich (4) aufsteckbar und entlang des Verankerungsbereichs (4) begrenzt axial verschiebbar ist.

## Beschreibung

Die Erfindung betrifft eine Ankerstange für Verankerungen mit organischen und/oder anorganischen Mörtelmassen gemäss dem Oberbegriff des Patentanspruchs 1.

Neben den klassischen Befestigungstechniken, bei denen Befestigungspunkte mit Hilfe von in einem Bohrloch kraft- und/oder formschlüssig verankerten Spreizdübeln oder Hinterschnittsystemen erstellt werden, sind aus dem Stand der Technik auch chemische Befestigungstechiken bekannt, bei denen eine Ankerstange in eine mit einer Mörtelmasse gefüllte Bohrung eingesetzt wird und nach dem Aushärten der Mörtelmasse fixiert ist. Derartige Verbundankersysteme weisen den Vorteil auf, dass sie weitgehend spreizdruckfrei sind und demnach geringe Achs- und Randabstände erlauben. Für Schwerlastbefestigungen sind Verbundankersysteme bekannt, bei denen eine mehrkomponentige organische und/oder anorganische Mörtelmasse in eine vorbereitete Bohrung eingefüllt wird, wobei die Komponenten der Mörtelmasse zunächst noch in Glas- oder Kunststoffgebinden getrennt voneinander vorliegen. Eine Ankerstange, wie sie beispielsweise aus der EP-B-0 356 425 bekannt ist, wird um ihre Längsachse rotierend in die Bohrung eingetrieben. Die eingebrachte Ankerstange zerstört die Gebinde, in denen die Komponenten der Mörtelmasse untergebracht sind. Durch die Rotation der Ankerstange wird die Mörtelmasse mehr oder weniger innig durchmischt, und die aufgebrochenen Gebinde werden weiter zerkleinert.

Es sind auch Verbundankersysteme bekannt, bei denen eine Mörtelmasse ausserhalb der Bohrung vorgemischt und erst danach in die vorbereitete Bohrung eingebracht wird. Derartige Verbundankersysteme, die beispielsweise auch von der Anmelderin vertrieben werden, werden überwiegend für Befestigungen in Ziegelmauerwerk, insbesondere in Hohlkammerziegeln, eingesetzt. Die üblicherweise zwei Reaktivkomponenten umfassende Mörtelmasse wird mittels eines Auspressgeräts aus den Einzelgebinden für die Reaktivkomponenten ausgepresst, in einer der Ausbringöffnung des Auspressgeräts vorgelagerten Mischereinrichtung gemischt und in eine im Ziegelmauerwerk vorbereitete Bohrung injiziert. Zur besseren Verteilung der bereits vorgemischten Mörtelmasse und um zu verhindern, dass die Mörtelmasse in eine Kammer des mit der Bohrung versehenen Ziegels abfliesst, wird die Bohrung zuvor meist mit einer mit Durchbrüchen versehenen Hülse bestückt. Um eine vollständige Verfüllung der mit der Hülse versehenen Bohrung zu gewährleisten, wird die Mörtelmasse in einem vorgeschriebenen Füllvorgang vom Bohrlochtiefsten aus zur Bohrlochmündung injiziert. Danach wird eine Ankerstange in die mit dem Injektionsmörtel gefüllte Bohrung eingesetzt. Nach dem Aushärten des Injektionsmörtels ist die Ankerstange in der Bohrung fixiert. Neuerdings kommen Injektionsmörtel vermehrt auch für Verankerungen in Vollmaterial, wie beispielsweise Beton, Gestein, und auch in Holz zur Anwendung.

In gerissenem Untergrund, in feuchten oder unzureichend von Bohrmehl gereinigten Bohrungen können Verankerungen von Ankerstangen mit organischem und/oder anorganischem Verbundmörtel oder mit Injektionsmörtel ein verschlechtertes Last-Verschiebeverhalten aufweisen. Die aus der EP-B-0 356 425 für einen in Glaspatronen angeordneten, organischen Verbundmörtel bekannten Beispiele für Ankerstangen weisen im Verankerungsbereich mehrere, hintereinander angeordnete Konen auf, die aus dem Schaft der Ankerstange herausgeformt sind. Die hintereinander angeordneten Konen sollen beim axialen Verschieben der Ankerstange unter Zuglast zu einem Nachspreizen in der Bohrung führen. Bei den bekannten Ankerstangen mit Mehrfachkonen erfolgt die Lasteinleitung in den Untergrund durch den Spreizdruck, den die Konen bei Zugbelastung über die Mörtelmasse auf den Verankerungsgrund ausüben. In gerissenem Beton kann es vorkommen, dass die Lasteinleitung sehr ungleich erfolgt, weil die oberflächennäheren Konen einen grösseren Spreizdruck ausüben als die tiefer angeordneten Konen der Ankerstange. Da in diesem Fall bei grossen Zuglasten die Gefahr besteht, dass der Beton im oberflächennahen Bereich ausbricht, kann die Tragfähigkeit des Betons nur unvollständig genutzt werden.

Aufgabe der vorliegenden Erfindung ist es daher, diesen Nachteil der Ankerstangen des Stands der Technik zu beseitigen. Es soll eine Ankerstange geschaffen werden, die eine gleichmässigere Lasteinleitung in den Verankerungsgrund ermöglicht, damit die Betontragfähigkeit besser genutzt werden kann. Dabei soll die Ankerstange einfach und kostengünstig in der Herstellung sein.

Die Lösung dieser Aufgaben besteht in einer Ankerstange mit den im kennzeichnenden Abschnitt des Patentanspruchs 1 angeführten Merkmalen. Bevorzugte Ausführungsvarianten und/oder vorteilhafte Weiterbildungen der Ankerstange sind Gegenstand der abhängigen Patentansprüche. Die erfindungsgemäss ausgebildete Ankerstange für Verankerungen mit organischen und/oder anorganischen Mörtelmassen besitzt einen Schaft mit einem Anschlussbereich und einem Verankerungsbereich. Der Verankerungsbereich weist wenigstens zwei axial hintereinander angeordnete, konusartige Erweiterungen auf, deren Durchmesser jeweils in Richtung des freien Vorderendes des Verankerungsbereichs zunimmt. Die an das freie Vorderende angrenzende konusartige Erweiterung ist von einem Abschlusskonus gebildet, der axial unverrückbar mit dem Schaft verbunden ist. Die zweite konusartige Erweiterung ist als ein separates Konuselement ausgebildet, die auf den Verankerungsbereich aufsteckbar und entlang des Verankerungsbereichs begrenzt axial verschiebbar ist.

Die erfindungsgemäss ausgebildete Ankerstange ermöglicht eine bessere Lasteinleitung. Während bei den Ankerstangen des Stands der Technik mit einer Anzahl von aus dem Schaft herausgeformten, axial hintereinander angeordneten konusförmigen Erweiterungen die Lastverteilung üblicherweise vom oberflächennahen Bereich zum Bohrlochtiefsten erfolgt, sind die Verhältnisse bei der erfindungsgemäss ausgestatteten Ankerstange gerade umgekehrt. Der axial feste, vorderste Abschlusskonus in Verbindung mit wenigstens einem, vorzugsweise mehreren weiteren Konuselementen, die axial verschiebbar angeordnet sind, gewährleistet, dass die Lasteinleitung immer vom Bohrlochtiefsten aus erfolgt. In Abhängigkeit von ihrer axialen Verschiebbarkeit wird die Last auch auf die übrigen Konuselemente verteilt. Insgesamt ergibt sich auf diese Weise eine kontrollierbare, gleichmässigere Lasteinleitung von den Konuselementen über den Mörtel in den Verankerungsgrund.

Manchmal kann es erforderlich sein, die Ankerstange mit den Konuselementen in einer vorgebbaren Orientierung in das Bohrloch einzusetzen. Damit die Orientierung auch im verankerten Zustand erhalten bleibt, sind die Konuselemente gegen eine Verdrehung relativ zum Verankerungsbereich gesichert. Die Verdrehsicherung ist dabei zweckmässigerweise durch einen Formschluss zwischen der Ankerstange und den Konuselementen gewährleistet. In einer vorteilhaften Variante der Erfindung weist dazu der Verankerungsbereich einen von der Kreisform abweichenden Querschnitt, vorzugsweise einen polygonalen Querschnitt, auf.

Damit der Bohrlochdurchmesser im Verhältnis zum Anschlussdurchmesser der Ankerstange nicht zu gross ausfallen muss, weist der die konusartigen Erweiterungen tragende Abschnitt des Verankerungsbereichs einen Durchmesser auf, der gegenüber einem vor dem Anschlussbereich liegenden Übergangsabschnitt verjüngt ist. Der zwischen dem verjüngten Bereich und dem Anschlussbereich liegende Übergangsbereich weist den Ausgangsdurchmesser des Ankerstangenrohlings auf. Vorzugsweise beträgt dabei das Verhältnis der Aussendurchmesser des Übergangsabschnitts und des verjüngten Verankerungsbereichs etwa 1,2 bis etwa 1,35.

Der an das freie Vorderende des Verankerungsbereichs angrenzende Abschlusskonus kann wie die axial verschiebbaren Konuselemente ein separates Teil sein, das auf die Ankerstange aufsteckbar oder aufschraubbar und mit diesem axial unverrückbar verbindbar ist. Beispielsweise kann der Abschlusskonus durch Formschluss (Nieten, Stauchen, Gewindeverbindung) oder durch Fügen (Schweissen, Löten, Kleben, ...) mit den Schaft verbunden sein. In einer fertigungstechnisch vorteilhaften Variante der Erfindung ist der Abschlusskonus einstückig mit dem Verankerungsbereich ausgebildet. Dazu wird er nach dem Aufstecken der übrigen, axial verschiebbaren Konuselemente beispielsweise durch Anstauchen, Radialnieten oder dergleichen am freien Vorderende des Schaftes angeformt.

Das Vorsehen von separaten Konuselementen, die auf den Verankerungsbereich der Ankerstange aufsteckbar sind, bietet auch die Möglichkeit, die Konuselemente aus einem vom Schaftmaterial verschiedenen Material auszubilden. Dies eröffnet die Möglichkeit, für den Schaft und die Konuselemente unterschiedliche Fertigungsprozesse einzusetzen. Durch die unterschiedliche Materialwahl für den Schaft und die Konuselemente kann auch den spezifischen Anforderungen an die Ankerstange Rechnung getragen werden, beispielsweise um den Konuselementen bei grossen Zuglasten ein gezieltes Fliessen zu ermöglichen. Der Schaft kann beispielsweise aus einem rostfreien Stahl bestehen, während die Konen aus einem leichter umformbaren Stahl gefertigt sind. Dabei müssen die Konuselemente nicht alle aus dem gleichen Material bestehen. Die Ankerstange kann in ihrem Verankerungsbereich Konuselemente aus verschiedenen Materialien aufweisen, um in unterschiedlich tiefen Bereichen des Bohrlochs unterschiedlich grosse Belastungen zu erzielen und damit die Lasteinleitung einem beispielsweise über die Tiefe sehr inhomogenen Verankerungsgrund anzupassen.

Im Zusammenhang mit einer dem Verankerungsgrund angepassten Lasteinleitung ist es auch von Vorteil, die Ankerstange im Verankerungsbereich mit Konuselementen auszustatten, die verschiedene Aussendurchmesser und/oder Konuswinkel aufweisen.

Die axiale Weiterleitung der bei Zugbelastung auftretenden Kräfte von einem Konuselement zum nächsten ist durch axial federnde bzw. axial elastische Zwischenelemente beeinflussbar, die zwischen den Konuslementen auf den Verankerungsbereich der Ankerstange aufsteckbar sind. Über die gezielte Kraftverteilung ist beispielsweise den im Bohrlochtiefsten angeordneten Konuselementen eine grössere Last zuordbar, um dadurch die Betontragfähigkeit besser zu nutzen. Die Zwischenelemente können metallische Elemente in Form von Scheiben oder Federn, beispielsweise Tellerfedern sein. In einer vorteilhaften Ausführungsvariante der Erfindung sind die Zwischenelemente elastische Kunststoffscheiben. Durch die Wahl des Kunststoffes, des Elastizitätsmoduls und die Dicke der Kunststoffscheiben ist die Kraftweiterleitung kontrollierbar. Je kleiner der Elastizitätsmodul und je grösser die Dicke der Kunststoffscheiben gewählt ist, desto weniger und desto später wird die Last weitergeleitet. Anstelle von Kunststoffscheiben unterschiedlicher Dicke kann auch die Zahl der zwischen den Konuselementen angeordneten Kunststoffscheiben variiert werden.

Die Zahl der entlang des Verankerungsbereichs angeordneten, axial verschiebbaren Konuselemente ist abhängig von der Länge des Verankerungsbereichs. Als zweckmässig erweist sich eine Anordnung der Konuselemente entlang etwa 1/2 bis etwa 2/3 der Länge des Verankerungsbereichs der Ankerstange. Die Anzahl der entlang des Verankerungsbereichs angeordneten Konuselemente ist im Prinzip nach oben unbegrenzt. Aus fertigungstechnischen Überlegungen erweist es sich jedoch als zweckmässig, wenn die Zahl der Konuselemente einschliesslich dem Abschlusskonus 10 nicht überschreitet.

Damit die Ankerstange sich beim Anschliessen und Befestigen eines Bauteils nicht im Bohrloch dreht, sind wenigstens einzelne der Konuselemente an ihrem Umfang mit einer oder mehreren Abflachungen versehen. Die Abflachungen erleichtern auch das Einstecken der Ankerstange in das mit der Mörtelmasse gefüllte Bohrloch. Die Mörtelmasse kann an den abgeflachten Bereichen steigen, und die Ankerstange wird besser in die Mörtelmasse eingebettet.

Im folgenden wird die Erfindung unter Bezugnahme auf in den Fig. dargestellte Ausführunsbeispiele näher erläutert. Es zeigen in zum Teil schematischer Darstellung in unterschiedlichen Massstäben:
- Fig. 1: eine perspektivische Ansicht eines ersten Ausführungsbeispiels der erfindungsgemässen Ankerstange;
- Fig. 2: ein Ausführungsbeispiel eines Schafts einer Ankerstange;
- Fig. 3: ein Ausführungsbeispiel eines Konuselements;
- Fig. 4: einen vergrösserten Abschnitt einer modifizierten Ankerstange in teilweise geschnittener Darstellung; und
- Fig. 5 und 6: zwei Varianten des Schafts einer Ankerstange.

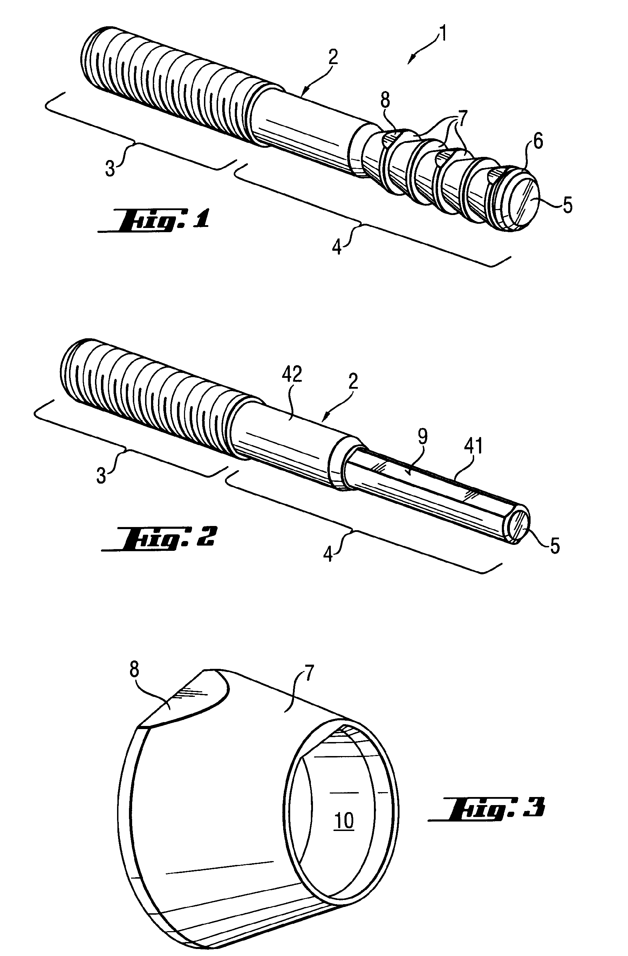

Das in Fig. 1 dargestellte Ausführungsbeispiel der Ankerstange trägt gesamthaft das Bezugszeichen 1. Die Ankerstange 1 besitzt einen Schaft 2 mit einem Verankerungsbereich 3, der beispielsweise mit einem Aussengewinde versehen ist, und einen axial daran anschliessenden Verankerungsbereich 4, der in ein mit einer organischen und/oder anorganischen Mörtelmasse gefülltes Bohrloch einsteckbar ist. Etwa die Hälfte der Längserstreckung des Verankerungsbereichs ist mit konusartigen Erweiterungen versehen, deren Durchmesser sich in Richtung des freien Vorderendes 5 des Verankerungsbereichs 4 vergrössert. Die konusartigen Erweiterungen umfassen einen am freien Vorderende 5 des Verankerungsbereichs 4 vorgesehenen Abschlusskonus 6 und axial hintereinander angeordnete Konuselemente 7. Der vorderste Abschlusskonus 6 ist fest mit dem Schaft 2 der Ankerstange 1 verbunden und axial unverrückbar. Beispielsweise ist der Abschlusskonus 6 durch Nieten oder Stauchen oder durch eine Gewindeverbindung formschlüssig mit dem Schaft 2 verbunden. Die feste Verbindung des Abschlusskonus 6 mit dem Schaft 2 der Ankerstange 1 kann auch durch Fügen, beispielsweise durch Schweissen, Löten, Kleben oder dergleichen erfolgen. Der Abschlusskonus 6 kann auch einstückig mit dem Schaft 2 ausgebildet sein. Die an den Abschlusskonus 6 anschliessenden Konuselemente 7 sind lose auf den Schaft 2 aufgesteckt. Die Konuselemente 7 weisen zum Schaft in axialer Richtung eine formschlüssige und/oder reibschlüssige Verbindung auf und sind relativ zum Verankerungsbereich 4 axial verschiebbar. Abflachungen 8 am Umfang einzelner Konuselemente 7 und am Abschlusskonus 6 dienen als Verdrehsicherung für die Ankerstange 1 und als Fliesshilfe für den Mörtel.

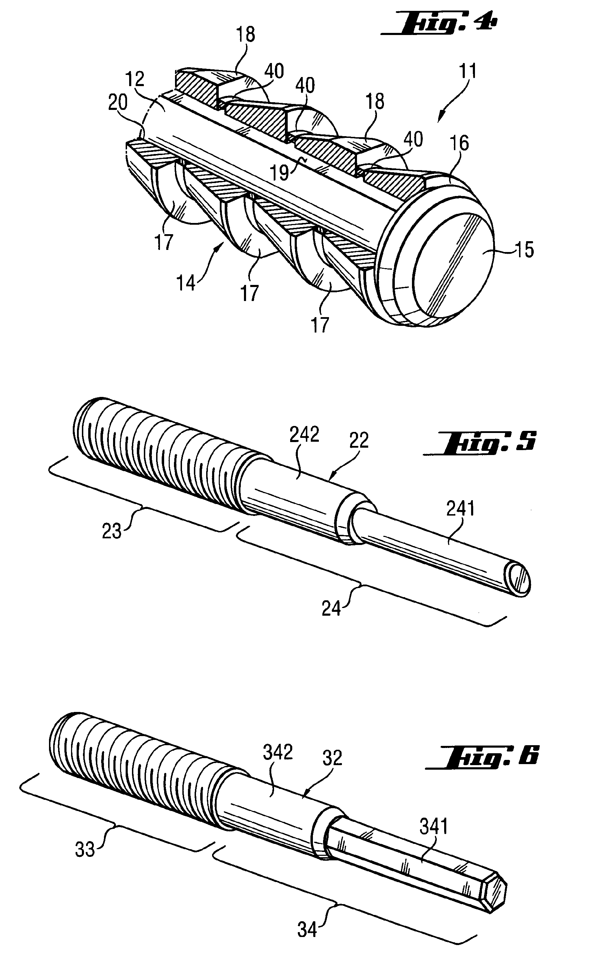

Fig. 2 zeigt den Schaft 2 der Ankerstange aus Fig. 1. Der mit dem Aussengewinde versehene Anschlussbereich ist mit dem Bezugszeichen 3 versehen, der Verankerungsbereich trägt das Bezugszeichen 4. Aus der Darstellung ist ersichtlich, dass der Verankerungsbereich 4 in einem Abschnitt 41, auf den die Konuselemente aufschiebbar sind, im Durchmesser verjüngt ausgebildet ist. Dabei beträgt das Verhältnis des Aussendurchmessers eines vor dem Anschlussbereich 3 liegenden Übergangsabschnitts 42 zum Aussendurchmesser des verjüngten Abschnitts 41 etwa 1,2 bis etwa 1,35. Der verjüngte Abschnitt 41 des Verankerungsbereichs 4 weist einen von der Kreisform abweichenden Querschnitt auf. Beispielsweise ist eine in axiale Richtung verlaufende Abflachung 9 vorgesehen, die sich über den gesamten verjüngten Abschnitt 41 bis zum freien Vorderende 5 des Verankerungsbereichs 4 erstreckt. Die axiale Abflachung 9 des im Querschnitt verjüngten Abschnitts 41 des Verankerungsbereichs 4 dient als formschlüssige Verdrehsicherung für die aufgeschobenen Konuselemente und als Steighilfe für die in das Bohrloch gefüllte Mörtelmasse.

In Fig. 3 ist ein Ausführungsbeispiel eines Konuselements dargestellt und mit dem Bezugszeichen 7 versehen. Das Konuselement 7 weist eine hohlkegelige Form mit einer Bohrung 10 auf, die in Entsprechung zu der axialen Abflachung 9 (Fig. 2) im Verankerungsbereich einen abgeflachten Abschnitt aufweist. Dadurch ist das auf den Verankerungsbereich aufgeschobene Konuselement 7 in Umfangsrichtung formschlüssig fixiert. Die axiale Verschiebbarkeit des Konuselements 7 entlang des Verankerungsbereichs wird dadurch nicht beeinflusst. Die Abflachungen 8 am Umfang des Konuselements 7 dienen als Verdrehsicherung für die Ankerstange in der mit dem Mörtel gefüllten Bohrung. Die Anordnung der umfangsseitigen Abflachungen 8 des Konuselements 7 ist dabei beliebig.

Eine in Fig. 4 dargestellte Variante der erfindungsgemässen Ankerstange trägt das Bezugszeichen 11. Der Schaft der Ankerstange 11 ist in Entsprechung zu der Bezeichung in Fig. 1 mit dem Bezugszeichen 12 versehen. 14 bezeichnet den teilweise im Schnitt dargestellten Verankerungsbereich der Ankerstange 11 mit einem an das freie Vorderende 15 angrenzenden Abschlusskonus 16 und axial verschiebbaren Konuselementen 17. Abflachungen 18 am Umfang der Konsuelemente 17 dienen als Verdrehsicherung für die Ankerstange 11. Die Konuselemente 17 und der Abschlusskonus 16 sind durch einen Formschluss gegenüber dem Verankerungsbereich 14 verdrehgesichert. Dazu weist der Verankerungsbereich 14 wiederum eine Abflachung 19 auf, die mit den korrespondierenden Bohrungen 20 der Konuselemente 17 bzw. des Abschlusskonus 16 zusammenwirkt. Zwischen den Konuselementen 17 sind elastische Zwischenelemente 40 angeordnet, die beispielsweise als hülsenförmige Kunststoffteile ausgebildet sind. Die Zwischenelemente 40 begrenzen und kontrollieren die axiale Verschiebbarkeit der Konuselemente 17.

Fig. 5 zeigt eine Ansicht eines geringfügig modifizierten Schafts 22. Der Anschlussbereich mit dem Aussengewinde trägt das Bezugszeichen 23. Der mit 24 bezeichnete Verankerungsbereich weist an seinem die Konuselemente tragenden Abschnitt 241 einen reduzierten Aussendurchmesser auf. Der zwischen dem verjüngten Abschnitt 241 und dem Anschlussbereich 23 liegende Übergangsabschnitt ist mit dem Bezugszeichen 242 versehen. Der Querschnitt des verjüängten Abschnitts 241 weicht von der Kreisform ab und besitzt beispielsweise eine elliptische Form. Es versteht sich, dass in Entsprechung die Bohrung der Konuselemente und gegebenenfalls des Abschlusskonus ebenfalls eine elliptische Form aufweist.

Der in Fig. 6 angedeutete Schaft 32 einer weiteren Variante der erfindungsgemässen Ankerstange besitzt wiederum einen mit einem Aussengewinde versehenen Anschlussbereich 33 und einen axial anschliessenden Verankerungsbereich 34. Der Verankerungsbereich 34 ist in einen Übergangsabschnitt 342 und in einen die Konuselemente tragenden verjüngten Abschnitt 341 unterteilt. Der verjüngte Abschnitt 341 des Verankerungsbereichs 34 ist als Sechskant ausgebildet. Die Bohrung der Konuselemente und gegebenenfalls auch des Abschlusskonus weist in diesem Fall ebenfalls einen sechskantigen Querschnitt auf, damit die Konuselemente und der Abschlusskonus auf den Verankerungsbereich 34 aufschiebbar sind. Die Verdrehsicherung erfolgt durch Formschluss des sechskantigen Querschnitts des Verankerungsbereichs 34 und den Innensechskant der Bohrung in den Konuselemente bzw. dem Abschlusskonus.

## Patentansprüche

1. Ankerstange für Verankerungen mit organischen und/oder anorganischen Mörtelmassen mit einem Schaft (2; 12; 22; 32), der einen Anschlussbereich (3; 13; 23; 33) und einen Verankerungsbereich (4; 14; 24; 34) mit axial hintereinander angeordneten, konusartigen Erweiterungen (6, 7; 16; 17) besitzt, deren Aussendurchmesser jeweils in Richtung des freien Vorderendes (5; 15) des Verankerungsbereichs zunimmt, **dadurch gekennzeichnet,** dass wenigstens zwei konusartige Erweiterungen vorgesehen sind, wobei die an das freie Vorderende (5; 15) angrenzende konusartige Erweiterung von einem Abschlusskonus (6; 16) gebildet ist, der axial unverrückbar mit dem Schaft (2; 12) verbunden ist, und die weitere konusartige Erweiterung als ein separates Konuselement (7; 17) ausgebildet ist, das auf den Verankerungsbereich (4; 14) aufsteckbar und entlang des Verankerungsbereichs (4; 14) begrenzt axial verschiebbar ist.

2. Ankerstange nach Anspruch 1, dadurch gekennzeichnet, dass die Anzahl der im Verankerungsbereich (4; 14) angeordneten konusartigen Erweiterungen (6, 7; 16, 17) grösser als zwei ist.

3. Ankerstange nach Anspruch 1 oder 2, dadurch gekennzeichnet, dass die Konuselemente (7; 17) gegen eine Verdrehung relativ zum Schaft (2; 12) gesichert sind.

4. Ankerstange nach Anspruch 3, dadurch gekennzeichnet, dass die Verdrehsicherung durch einen Formschluss zwischen dem Schaft (2; 12) und den Konuselementen (7; 17) gewährleistet ist.

5. Ankerstange nach Anspruch 4, dadurch gekennzeichnet, dass der Verankerungsbereich (4; 14; 24; 34) wenigstens abschnittsweise einen von der Kreisform abweichenden Querschnitt, vorzugsweise einen polygonalen Querschnitt aufweist.

6. Ankerstange nach einem der vorangehenden Ansprüche, dadurch gekennzeichnet, dass der die konusartigen Erweiterungen aufweisende Abschnitt (41, 241; 341) des Verankerungsbereichs (4; 24; 34) einen gegenüber einem zylindrischen Übergangsabschnitt (42; 242; 342) zum Anschlussbereich (3; 23; 33) verjüngten Durchmesser aufweist, wobei die Durchmesser des zylindrischen Abschnitts (42; 242; 342) und des verjüngten Abschnitts (41; 241; 341) ein Verhältnis von etwa 1,2 bis etwa 1,35 aufweisen.

7. Ankerstange nach Anspruch 6, dadurch gekennzeichnet, dass der an das freie Vorderende angrenzende Abschlusskonus einstückig mit dem Verankerungsbereich ausgebildet ist und beispielsweise durch Anstauchen, Radialnieten oder dergleichen aus dem Verankerungsbereich herausgeformt ist.

8. Ankerstange nach einem der vorangehenden Ansprüche, dadurch gekennzeichnet, dass die Konuselemente (7; 17) aus einem vom Schaftmaterial verschiedenen Material bestehen.

9. Ankerstange nach einem der vorangehenden Ansprüche, dadurch gekennzeichnet, dass die Konuselemente unterschiedliche Aussendurchmesser und/oder Konuswinkel aufweisen.

10. Ankerstange nach einem der vorangehenden Ansprüche, dadurch gekennzeichnet, dass die Konuselemente (17) voneinander durch axial federnde bzw. axial elastische Zwischenelemente (40) getrennt sind.

11. Ankerstange nach Anspruch 10, dadurch gekennzeichnet, dass die Zwischenelemente (40) elastische Kunststoffscheiben sind, die vorzugsweise unterschiedliche Dicken aufweisen und/oder in unterschiedlicher Anzahl zwischen den Konuselementen (17) angeordnet sind.

12. Ankerstange nach einem der vorangehenden Ansprüche, dadurch gekennzeichnet, dass die Konuselemente (7; 17) entlang etwa 1/2 bis etwa 2/3 der Länge des Verankerungsbereichs (4; 14) angeordnet sind.

13. Ankerstange nach Anspruch 12, dadurch gekennzeichnet, dass die Anzahl der Konuselemente (7; 17) einschliesslich dem Abschlusskonus (6; 16) die Zahl 10 nicht überschreitet.

14. Ankerstange nach einem der vorangehenden Ansprüche, dadurch gekennzeichnet, dass wenigstens einzelne der Konuselemente (7; 17) an ihrem Umfang mit Abflachungen (8; 18) versehen sind.
